# EUROPÄISCHE PATENTSCHRIFT

(11) **EP 3 809 165 B1**
(45) Veröffentlichungstag und Bekanntmachung des Hinweises auf die Patenterteilung: **31.07.2024**
(21) Anmeldenummer: 19203185.4
(22) Anmeldetag: 15.10.2019
(51) Int. Cl.: G01V 8/20

(54) **SENSOR**
SENSOR
CAPTEUR

(43) Veröffentlichungstag der Anmeldung: 21.04.2021
(73) Patentinhaber: Leuze electronic GmbH + Co. KG, 73277 Owen/Teck (DE)
(72) Erfinder: Feller, Bernhard, 86316 Friedberg (DE); Tull, Andreas, 82229 Seefeld (DE); Olbrich, Sebastian, 80992 München (DE); Heckmayr, Alexander, 86807 Buchloe (DE); Koperski, Joachim, 85521 Ottobrunn (DE); Hörderich, Johann, 82291 Mammendorf (DE)
(74) Vertreter: Ruckh, Rainer Gerhard

(56) Entgegenhaltungen:
- EP-A2- 1 731 926
- DE-A1- 102004 012 270
- DE-A1- 102004 035 010
- DE-A1- 102007 031 430
- DE-A1- 4 407 967
- DE-U1- 202009 000 776
- DE-U1- 29 620 422
- DE-U1- 29 810 418
- US-A- 4 282 430
- US-A1- 2010 044 120
- US-A1- 2015 268 067

## Beschreibung

Die Erfindung betrifft einen Sensor gemäß dem Oberbegriff des Anspruchs 1.

Derartige Sensoren dienen generell zur Erfassung von Objekten in einem Überwachungsbereich. Hierzu weist der Sensor in wenigstens einem Gehäuse integrierte Sensorkomponenten auf. Von den Sensorkomponenten generierte Sensorsignale werden in einer Steuer- und Auswerteeinheit ausgewertet, um ein Objektfeststellungssignal zu generieren dessen Signalzustände angeben, ob sich ein Objekt im Überwachungsbereich befindet oder nicht.

Derartige Sensoren können insbesondere als optische Sensoren, beispielsweise als Lichtschranken oder Lichtvorhänge ausgebildet sein.

Insbesondere können die Sensoren als Sicherheitssensoren ausgebildet sein und werden in sicherheitstechnischen Applikationen, insbesondere im Bereich des Personenschutzes, eingesetzt. Hierzu weisen die Sicherheitssensoren einen fehlersicheren Aufbau auf. Beispielsweise werden derartige Sicherheitssensoren zur Gefahrenbereichsüberwachung an Anlagen eingesetzt, von welchen Gefahren für Personen ausgehen können. Wird mit dem Sicherheitssensor ein Objekt im Überwachungsbereich erfasst, wird durch das dadurch generierte Objektfeststellungssignal die Anlage stillgesetzt, sodass von dieser keine Gefahren mehr ausgehen können.

Um den Sensor, insbesondere Sicherheitssensor, an die Anforderungen der jeweiligen Applikation anzupassen, ist eine geeignete Betriebsarteinstellung des Sensors erforderlich.

Ein Beispiel hierfür ist eine Mehrfachanordnung von Lichtvorhängen, die für eine Gefahrenbereichsüberwachung eingesetzt werden. Jeder Lichtvorhang weist mehrere Lichtstrahlen emittierende Sender und Lichtstrahlen empfangende Empfänger auf. Damit sich die einzelnen Sender und Empfänger der Lichtvorhänge nicht gegenseitig beeinflussen, werden den Lichtstrahlen der Sender unterschiedlicher Lichtvorhänge verschiedene Codierungen aufgeprägt. Dies erfolgt durch eine Betriebsarteinstellung der Lichtvorhänge.

Prinzipiell ist es möglich die Betriebsart über Anschlusspins eines Anschlusssteckers des Sensors vorzugeben, indem über diese Anschlusspins von einer externen Einheit entsprechende Signale eingelesen werden. Nachteilig hierbei ist jedoch, dass dann diese Anschlusspins nicht mehr für IO-Funktionen des Sensors zur Verfügung stehen.

Weiterhin ist es bekannt, an einem Gehäuse eines Sensors Kodierschalter vorzusehen, die an der Außenseite des Gehäuses von einem Benutzer betätigt werden können. Nachteilig hierbei ist, dass derartige Kodierschalter mit Deckeln oder dergleichen abgedichtet werden müssen, um ein Eindringen von Schmutz oder Feuchtigkeit in das Gehäuse zu verhindern.

Eine Betriebsarteinstellung ist weiterhin über eine optische oder elektrische Kommunikationsschnittstelle möglich. Nachteilig hierbei ist, dass hierfür eine externe Kommunikationseinrichtung, wie ein Personal Computer, vorhanden sein muss, was bei vielen Applikationen nicht der Fall ist.

Die DE 296 20 422 U1 betrifft einen optoelektronischen Sensor mit einem Gehäuse, in dem eine Strahlungsquelle und/oder ein optoelektronischer Empfänger, optische Bauelemente zur Strahlbeeinflussung, elektronische Schaltungskomponenten sowie elektrische und/oder mechanische Einstell-, Bedienungs- oder Kontaktierungselemente angeordnet sind. Der Sensor weist ein Gehäuse auf, welches innerhalb eines Gehäusegrundkörpers fest mit diesem verbundene, relativ zueinander exakt positionierte Aufnahmevorrichtungen der optoelektronischen, elektrischen, optischen und/oder mechanischen Komponenten beinhaltet. Die Einstellelemente durchsetzen Durchführungen im Gehäuse. Als Anzeigeelement ist eine Anzeigediode vorgesehen.

Die US 2015/0268067 A1 betrifft einen optoelektronischen Sensor, dessen Sensorkomponenten in einem Gehäuse integriert sind. Zur Einstellung von Parametern des Sensors ist eine Bedienereinheit vorgesehen. Diese umfasst als mechanische Einstellmittel eine in einer Gehäusewand gelagerte Welle, an deren an der Außenseite des Gehäuses ausmündendem Ende ein Bedienknopf vorgesehen ist. Durch Drehen des Bedienknopfs und damit der Welle wird eine Encoderscheibe gedreht. Durch die verschiedenen Stellungen der Encoderscheibe erfolgt in einer Kontrolleinheit die Parametrierung des Sensors. Diese Einstellungen können mit einem optischen Anzeigeelement angezeigt werden.

Die US 2010/0044120 A1 betrifft eine Eingabeeinheit, an welcher ein Benutzer Eingaben vornehmen kann, um Kontroll- oder Schaltvorgänge zu initiieren. Die Eingabeeinheit kann ein Bedienelement zur Beeinflussung elektrischer Größen aufweisen.

Die US 4 282 430 A betrifft einen photoelektrischen Schalter, der zur Detektion von Objekten dient. Der Schalter weist ein Gehäuse auf. Im Gehäuse ist eine Welle gelagert, die mit einem Bedienknopf an der Außenseite des Gehäuses befestigt werden kann. Durch Betätigen des Bedienknopfs können Lageverstellungen von optischen Sensorkomponenten vorgenommen werden.

Die DE 298 10 418 U1 betrifft eine optoelektronische Vorrichtung zum Erfassen von Objekten in einem Überwachungsbereich mit einem Sendelichtstrahlen emittierenden Sender und einer diesem zugeordneten Sendeoptik sowie einem Empfangslichtstrahlen empfangenden Empfänger und einer diesem zugeordneten Empfangsoptik. Der Sender und der Empfänger sind in einem gemeinsamen Gehäuse integriert, an dessen Frontseite wenigstens ein Austrittsfenster angebracht ist, durch welches die Sende- und Empfangslichtstrahlen geführt sind und an dessen Außenseite ein Bedienelement zur Einstellung von Betriebsparametern vorgesehen ist.

Die DE 20 2009 000 776 U1 betrifft ein Sicherheits-Lichtgitter zur Überwachung eines Schutzfeldes mit einer ersten Leiste, die eine Reihe nebeneinander angeordneter Lichtsender und/oder Lichtempfänger aufweist und einer zweiten Leiste, die den Lichtsendern und/oder Lichtempfängern der ersten Leiste entsprechende ebenfalls nebeneinander angeordnete Lichtempfänger und/oder Lichtsender aufweist, so dass eine Vielzahl zueinander paralleler und das Schutzfeld bildender Lichtschranken gebildet sind. Einer Steuer- und Auswerteeinheit ist vorgesehen, die die einzelnen Lichtschranken steuert und auswertet, so dass bei Unterbrechung einer oder mehrerer Lichtschranken durch ein Objekt ein Objektfeststellungssignal ableitbar ist. In einer Leiste ist ein Bedienelement zur Bedienung des Lichtgitters vorgesehen.

Die DE 10 2004 012 270 A1 betrifft einen photoelektrischen Sensor, welcher eine Lichtemissionseinheit mit einem Lichtemissionselement und einer Lichtemissionslinse sowie eine Lichtempfangseinheit mit einem Lichtempfangselement und einer Lichtempfangslinse aufweist. Eine Lichtabschirmungsplatte mit einem Lichtdurchtrittsfenster vorgeschriebener Form ist zwischen dem Lichtemissionselement und der Lichtemissionslinse angeordnet. Das Lichtdurchtrittsfenster der Lichtabschirmungsplatte ist als Öffnung durch Laserbearbeitung ausgebildet.

Die DE 44 07 967 A1 betrifft eine elektronische Vorrichtung mit einem einen Sendestrahl emittierenden und/oder empfangenden Sensorelement, welches in einem Gehäuse integriert ist, wobei das Gehäuse aus mehreren Gehäuseteilen aufgebaut ist, welche Aufnahmeteile aufweisen, mittels derer die Gehäuseteile formschlüssig verbunden werden. Um eine effiziente Abdichtung des Gehäuses zu gewährleisten, ist jeweils eines von zwei formschlüssig ineinandergreifenden Aufnahmeteilen mit einem elastischen Material beschichtet.

Die DE 10 2004 035 010 A1 betrifft einen optischen Sensor zur Erfassung von Objekten in einem Überwachungsbereich und weist einen Sendelichtstrahlen emittierenden Sender und einen Empfangslichtstrahlen empfangenden Empfänger auf. Weiterhin weist der optische Sensor eine Auswerteeinheit, in welcher in Abhängigkeit der Empfangssignale ein Objektfeststellungssignal generiert wird, und wenigstens ein Sensorgehäuse, in dessen Frontwand ein Austrittsfenster angeordnet ist, durch welches die Sendelichtstrahlen und/oder die Empfangslichtstrahlen geführt sind, auf. Das Sensorgehäuse besteht aus einem Gehäusekörper und einem auf diesen aufsetzbaren Frontdeckel, welcher zumindest einen Teil der Frontwand des Sensorgehäuses bildet und in welchem das Austrittsfenster angeordnet ist.

Die EP 1 731 926 A2 betrifft einen Sensor zur Erfassung von Objekten in einem Überwachungsbereich, mit in wenigstens einem Gehäuse integrierten Sensorkomponenten, und mit wenigstens einem beweglichen Bedienelement, zu dessen Aufnahme feststehende Komponenten am Gehäuse oder innerhalb des Gehäuses vorgesehen sind. Wenigstens ein Hohlraum ist zwischen dem Bedienelement und einer feststehenden Komponente mit einer Niederdruckspritzmasse befüllt, welche nur an der feststehenden Komponente und nicht an dem Bedienelement haftet.

Die DE 10 2007 031 430 A1 betrifft ein Lichtgitter, dessen Betrieb durch Vergabe von Codes einstellbar ist.

Der Erfindung liegt die Aufgabe zugrunde, für einen Sensor der eingangs genannten Art eine bedienerfreundliche und gleichzeitig sichere Betriebsarteinstellung bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sensor zur Erfassung von Objekten in einem Überwachungsbereich, mit wenigstens einem Gehäuse zur Aufnahme von Sensorkomponenten. Es sind Mittel zur Betriebsarteinstellung vorgesehen, welche einen eine Welle aufweisenden Betätiger umfassen, der mittels Dichtmitteln abgedichtet in einer Gehäusewand gelagert ist und an der Außenseite des Gehäuses betätigbar ist. Im Gehäuse sind Schaltmittel vorgesehen, die durch Betätigen des Betätigers vorgegebene Schaltzustände einnehmen, durch welche Betriebsarten bestimmt sind. Zur Anzeige einer eingestellten Betriebsart sind Anzeigemittel vorgesehen. Eine Steuer- und Auswerteeinheit zur Steuerung von Sensorkomponenten und/oder zur Auswertung von Sensorsignalen ist vorgesehen. Mittels der Steuer- und Auswerteeinheit ist der Sensor in der eingestellten Betriebswart betrieben. Das Schaltmittel umfasst zwei dem Betätiger zugeordnete Schalter, welche eine redundante Struktur zur Betriebsarteinstellung bilden, wobei die Steuer- und Auswerteeinheit ausgebildet ist zu prüfen, dass die beiden Schalter ein identisches Signal erzeugen.

Die erfindungsgemäße Betriebsarteinstellung kann für Sensoren unterschiedlichster Ausbildungen eingesetzt werden. Insbesondere kann der Sensor als optischer Sensor, beispielsweise als Lichtschranke oder Lichtvorhang ausgebildet sein.

Besonders vorteilhaft ist der erfindungsgemäße Sensor als Sicherheitssensor ausgebildet. Der Sicherheitssensor weist dann einen fehlersicheren Aufbau auf und kann in sicherheitstechnischen Applikationen eingesetzt werden.

Ein wesentlicher Vorteil der Erfindung besteht darin, dass der Betätiger an der Außenseite des Gehäuses angebracht ist und damit unmittelbar von einem Benutzer betätigt werden kann, wodurch ein hoher Bedienkomfort für die Betriebsarteinstellung gegeben ist. Wesentlich hierbei ist, dass der Betätiger eine Welle aufweist, die in einem Gehäuse und insbesondere durch geeignete Dichtmittel abgedichtet gelagert ist. Dadurch wird ein unerwünschtes Eindringen von Schmutz oder Feuchtigkeit in das Gehäuse verhindert. Die Mittel zur Betriebsarteinstellung bilden damit eine vollständig dichte Schnittstelle zum Gehäuse.

Weiterhin wesentlich ist, dass durch ein manuelles Betätigen des Betätigers an der Außenseite des Gehäuses Schaltmittel im Innern des Gehäuses so betätigt werden, dass diese definierte Schaltzustände einnehmen, durch welche die jeweilige Betriebsart vorgegeben ist. Die Schaltmittel sind somit im Gehäuse liegend gegen Umwelteinflüsse geschützt.

Ein weiterer wesentlicher Vorteil der Erfindung besteht darin, dass mit den Anzeigemitteln die eingestellte Betriebsart unmittelbar angezeigt wird, sodass der Benutzer die eingestellte Betriebsart sofort kontrollieren kann.

Die erfindungsgemäßen Mittel zur Betriebsarteinstellung weisen eine kompakte Bauform auf und sind kostengünstig herstellbar. Externe Einheiten sind nicht erforderlich, was den Aufwand für die Betriebsarteinstellung sehr gering hält.

Gemäß einer besonders vorteilhaften Ausgestaltung der Erfindung erfolgt die Betriebsarteinstellung durch Drehen und/oder Verschieben der Welle des Betätigers oder durch Auswechseln von unterschiedlich gestalteten Betätigern und/ oder Wellen.

Damit wird eine besonders einfache, bedienerfreundliche Betriebsarteinstellung ermöglicht.

Erfindungsgemäß sind als Schaltmittel zwei Schalter vorgesehen, die mittels des Betätigers simultan betätigbar sind.

Damit sind redundante Schaltmittel vorhanden, durch welche eine fehlersichere Betriebsarteinstellung ermöglicht wird, die insbesondere auch bei Ausfall eines der Schalter noch funktionsfähig ist.

Die beiden Schalter werden mit dem Betätiger simultan in gleicher Weise betätigt, sodass insbesondere die Schalter bei einer Betriebsarteinstellung dieselben Schaltzustände einnehmen müssen, was für eine Fehlerkontrolle der Betriebsarteinstellung ausgenutzt werden kann.

Gemäß einer ersten Variante sind die beiden Schalter gemeinsam auf einer Welle angeordnet und über diese Welle sind die Schalter gleichzeitig betätigbar.

Gemäß einer zweiten Variante weist der Betätiger eine Schnecke auf, die die beiden Schalter gleichzeitig betätigt.

Gemäß einer weiteren Variante sind unterschiedliche Betätiger und/oder Wellen vorgesehen, welche wahlweise in der Gehäusewand gelagert werden können, wobei abhängig von einem ausgewählten Betätiger ein spezifisches Schaltmittel betätigbar ist.

Beispielsweise sind als Betätiger Schrauben unterschiedlicher Längen vorgesehen.

Insbesondere sind Betätiger mit unterschiedlichen Formen oder Geometrien oder mit unterschiedlichen Materialbeschaffenheiten vorgesehen, welche mittels Schaltmitteln erfassbar sind.

Dabei unterscheiden sich die Betätiger hinsichtlich magnetischer oder dielektrischer Eigenschaften oder optischer Eigenschaften in Form von Transmissions-, Oberflächenremissions- oder Farbeigenschaften.

Als Schalter können generell Sensoren oder dergleichen vorgesehen sein, die bestimmte Strukturen oder Farbeigenschaften des Betätigers erfassen und abhängig hiervon bestimmte Schaltzustände einnehmen, die eine bestimmte Betriebsart vorgeben können.

Besonders vorteilhaft ist der oder jeder Schalter ein Kodierschalter.

Je nach Betätigung des Betätigers nehmen die Kodierschalter Schaltzustände ein, in welchen diese codierte Signale generieren, die die jeweilige Betriebsart definieren.

Mit den Anzeigemitteln wird erfindungsgemäß die jeweils eingestellte Betriebsart angezeigt.

Gemäß einer ersten Variante kann durch eine geeignete Ausbildung des Betätigers selbst das Anzeigemittel realisiert sein.

Beispielsweise sind als Anzeigemittel auf dem Betätiger eine Markierung und am Gehäuse eine Skala vorgesehen.

Durch ein Drehen oder Verschieben des Betätigers zur Einstellung einer Betriebsart wird die Markierung am Betätiger in eine diese Betriebsart kennzeichnende Stellung an der Skala eingebracht.

Gemäß einer alternativen Ausgestaltung sind als Anzeigemittel unterschiedliche Farben und/oder Formgebungen des Betätigers vorgesehen.

Der Betätiger kann zum Beispiel einen an der Außenseite des Gehäuses liegenden Betätigerkopf aufweisen, mit dessen spezifischer Form oder Farbe die jeweils eingestellte Betriebsart visualisiert ist.

Gemäß einer zweiten Variante ist wenigstens ein vom Betätiger getrenntes Anzeigemittel vorgesehen.

Vorteilhaft ist als Anzeigemittel eine elektronische Anzeige vorgesehen.

Die elektronische Anzeige kann beispielsweise von einer LED Anzeige, insbesondere einer Sieben-Segment-Anzeige gebildet sein, auf welcher alphanumerisch die eingestellte Betriebsart angezeigt wird.

Erfindungsgemäß weist der Sensor eine Steuer- und Auswerteeinheit zur Steuerung von Sensorkomponenten und/oder zur Auswertung von Sensorsignalen auf, wobei mittels der Steuer- und Auswerteeinheit der Sensor in der eingestellten Betriebsart betrieben ist.

Die Steuer- und Auswerteeinheit kann somit einerseits zur Steuerung des Betriebs senderseitiger Sensorkomponenten wie zum Beispiel Lichtstrahlen emittierender Sender und/oder zur Steuerung des Betriebs empfangsseitiger Sensorkomponenten wie zum Beispiel Lichtstrahlen empfangenden Empfängern dienen. Weiterhin kann in der Steuer- und Auswerteeinheit abhängig von Sensorsignalen von Sensorkomponenten, insbesondere Empfangssignalen von Empfängern, ein Objektfeststellungssignal generiert werden, dessen Signalzustände angeben, ob sich ein Objekt im Überwachungsbereich befindet oder nicht.

Für den Fall, dass der Sensor einen Sicherheitssensor ausbildet, weist die Steuer- und Auswerteeinheit einen redundanten, fehlersicheren Aufbau auf, beispielsweise in Form zweier sich gegenseitig zyklisch überwachenden Prozessoren.

Erfindungsgemäß werden mit der Steuer- und Auswerteeinheit auch die Funktionen der Mittel zur Betriebsarteinstellung gesteuert und kontrolliert und zwar derart, dass deren fehlersichere Funktion gewährleistet ist, sodass der Sensor als Sicherheitssensor eingesetzt werden kann.

Gemäß einer ersten Variante ist durch Betätigen des Betätigers eine Betriebsart unmittelbar vorgegeben.

Die mit dem Betätiger eingestellten Schaltmittel geben somit unmittelbar die Betriebsart für den Sensor vor, das heißt die eingestellte Betriebsart kann unmittelbar in der Steuer- und Auswerteeinheit übernommen werden.

Gemäß einer zweiten Variante generieren durch Betätigen des Betätigers die Schaltmittel Schaltsignale, in Abhängigkeit derer in der Steuer- und Auswerteeinheit eine Betriebsart bestimmt wird.

Ein Beispiel hierfür sind Schaltmittel in Form von Schaltern, die je nach Einstellung des Betätigers Signale generieren, die in der Steuer- und Auswerteeinheit gewählt werden, wobei abhängig hiervon die Betriebsarteinstellung erfolgt.

Vorteilhaft ist in der Steuer- und Auswerteeinheit eine Erkennung eines Überlaufs und auch einer Vorwärts-/Rückwärtserkennung bei der Generierung von Impulsfolgen möglich, um so falsch eingestellte Betriebsarten erkennen und gegebenenfalls korrigieren zu können.

Generell ist die Steuer- und Auswerteeinheit zur Fehlerkontrolle der Schaltmittel ausgebildet.

Diese Kontrolle kann allgemein eine Kontrolle von Schaltsignalen, insbesondere Codierungen sein, die in den Schaltmitteln erzeugt werden.

Besonders vorteilhaft bilden zwei dem Betätiger zugeordnete Schalter eine redundante Struktur zur Betriebsarteinstellung. In diesem Fall wird in der Steuer- und Auswerteeinheit überprüft, ob ein fehlerfreier Zustand der Schalter vorliegt und diese dieselben Schaltzustände liefern.

Insbesondere werden mittels der Steuer- und Auswerteeinheit die Anzeigemittel getestet.

Hierzu können die Anzeigemittel, die insbesondere als elektrische Anzeigen ausgebildet sind, über die Steuer- und Auswerteeinheit in vorgegebenen Zeitintervallen aus- und eingeschaltet werden. Dieser Test erfolgt im zeitlichen Wechsel mit der Anzeige der Betriebsart.

Weiterhin kann die eingestellte Betriebsart redundant oder im zeitlichen Wechsel angezeigt werden.

Gemäß einer konstruktiv vorteilhaften Ausgestaltung weist der Betätiger eine an der Außenseite des Gehäuses angeordnete Betätigungsfläche auf, die nur mit einem Betätigungs-Werkzeug betätigbar ist.

Damit wird eine manipulationssichere Betriebsarteinstellung erreicht, da nur ein Benutzer mit dem speziell hierfür vorgesehenen Betätigungs-Werkzeug die Betriebsarteinstellung einstellen kann.

Gemäß einer weiteren konstruktiv vorteilhaften Ausgestaltung ist eine Abdeckung vorgesehen, mittels derer der an der Außenseite des Gehäuses angeordnete Teil des Betätigers abdeckbar ist.

Diese Abdichtung hat keinerlei Abdichtungsfunktion, sondern bildet lediglich einen einfachen Schutz gegen Manipulationen.

Gemäß einer vorteilhaften Weiterbildung der Erfindung ist ein weiterer Betätiger vorgesehen, der an der Außenseite des Gehäuses betätigbar ist. Mit dem weiteren Betätiger ist eine ausgewählte Betriebsart bestätigbar.

Alternativ ist eine Betriebsart durch eine Ein-/Ausschaltsequenz einer Betriebsspannung betätigbar.

Die Sequenz der Ein-/Ausschaltsequenzen der Betriebsspannung des Sensors, wird in der Steuer- und Auswerteeinheit mit einer Erwartungshaltung, das heißt mit Sollwerten verglichen, wobei die Betriebsarteinstellung nur dann als gültig gewertet wird, wenn die Ein-/Ausschaltsequenzen mit der Erwartungshaltung übereinstimmen.

In beiden Fällen ist Voraussetzung für eine Implementierung einer Betriebsarteinstellung im Sensor, dass diese nicht nur mit dem ersten Betätiger angezeigt wird, sondern auch durch zusätzliche Einrichtungen bestätigt wird, wodurch die Fehlersicherheit der Betriebsarteinstellung weiter erhöht wird.

Insbesondere ist die Sensorfunktion bei einer unbestätigten Betriebsart blockiert.

Dadurch werden durch fehlerhafte Betriebsarteinstellungen bedingte Fehlfunktionen des Sensors vermieden.

Die Erfindung wird im vorliegenden Fall anhand der Zeichnungen erläutert. Es zeigen:
- Figur 1:: Ausführungsbeispiel des erfindungsgemäßen Sensors in Form eines Lichtvorhangs.
- Figur 2:: Erste Ausführungsform von Mitteln zur Betriebsarteinstellung für den Sensor gemäß Figur 1.
- Figur 3:: Zweite Ausführungsform von Mitteln zur Betriebsarteinstellung für den Sensor gemäß Figur 1.

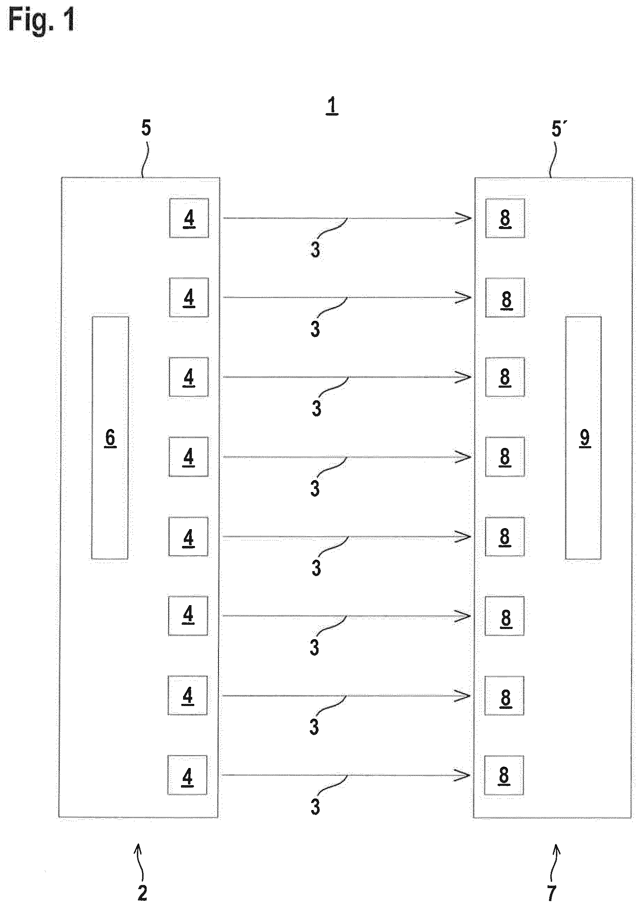

Figur 1 zeigt ein Ausführungsbeispiel des erfindungsgemäßen Sensors, der im vorliegenden Fall als optischer Sensor in Form eines Lichtvorhangs 1 ausgebildet ist.

Der Lichtvorhang 1 ist im vorliegenden Fall als Sicherheitssensor ausgebildet und weist einen fehlersicheren Aufbau auf, sodass der Lichtvorhang 1 in sicherheitstechnischen Applikationen eingesetzt werden kann.

Wie aus Figur 1 ersichtlich, weist der Lichtvorhang 1 eine Sendereinheit 2 mit einer Reihenanordnung von Lichtstrahlen 3 emittierenden Sendern 4 in einem ersten Gehäuse 5 auf. Die Sender 4 werden von einer Sendersteuerung 6 gesteuert. Weiterhin weist der Lichtvorhang 1 eine Empfängereinheit 7 mit einer Reihenanordnung von Lichtstrahlen 3 empfangenden Empfängern 8 in einem zweiten Gehäuse 5' auf. Den Empfängern 8 ist eine Auswerteeinheit 9 zugeordnet.

Der Lichtvorhang 1 dient zur Erfassung von Objekten in einem Überwachungsbereich, wobei die Sendereinheit 2 und die Empfängereinheit 7 an gegenüberliegenden Rändern des Überwachungsbereichs angeordnet sind. Bei freiem Überwachungsbereich gelangen die Lichtstrahlen 3 eines Senders 4 ungehindert zu dem jeweils zugeordneten Empfänger 8. Jeder Sender 4 mit dem zugeordneten Empfänger 8 bildet ein Sender-Empfänger-Paar. Die Sender-Empfänger-Paare werden einzeln zyklisch nacheinander aktiviert. Die Einzelaktivierung der Sender 4 erfolgt über die Sendersteuerung 6, die Empfänger 8 werden in bekannter Weise optisch auf die Sender 4 synchronisiert.

Dringt ein Objekt in den Überwachungsbereich ein, werden die Lichtstrahlen 3 wenigstens eines Senders 4 unterbrochen, was durch eine Schwellwertbewertung der Empfangssignale der Empfänger 8 erkannt wird. Abhängig von den Empfangssignalen der Empfänger 8 wird in der Auswerteeinheit 9 ein Objektfeststellungssignal generiert, dessen Schaltzustände angeben, ob ein Objekt im Überwachungsbereich vorhanden ist oder nicht.

Für den Einsatz im Bereich der Sicherheitstechnik weist die Auswerteeinheit 9 einen redundanten Aufbau auf, insbesondere in Form zweier sich gegenseitig überwachender Prozessoren. Auch die Sendersteuerung 6 kann einen redundanten Aufbau aufweisen.

Um den Betrieb des Lichtvorhangs 1 an die jeweiligen Applikationen anzupassen, können in diesem unterschiedliche Betriebsarten eingestellt werden.

Um gegenseitige Beeinflussungen mehrerer Lichtvorhänge 1 zu vermeiden, kann eine Betriebsarteinstellung darin bestehen, dass die Sender 4 Lichtstrahlen 3 mit spezifischen, eindeutig unterscheidbaren Codierungen aussenden, die selektiv in den zugeordneten Empfängern 8 erkannt werden.

Auch können Betriebsarteinstellungen derart durchgeführt werden, dass vorgegebene Blanking- oder Mutingbereiche für den Lichtvorhang 1 vorgegeben werden.

Auch eine Vorgabe von Schwellwerten, Empfangssignalverstärkungen oder Sendelichteinstellungen können über eine Betriebsarteinstellung vorgenommen werden.

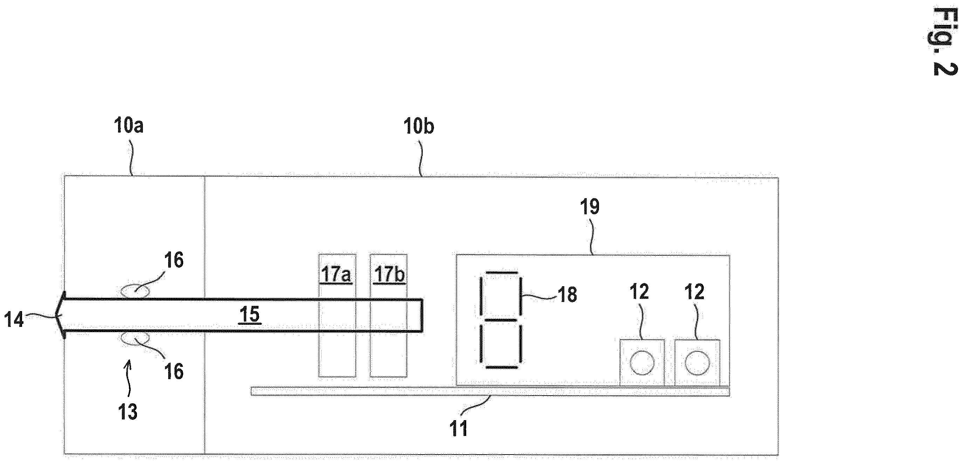

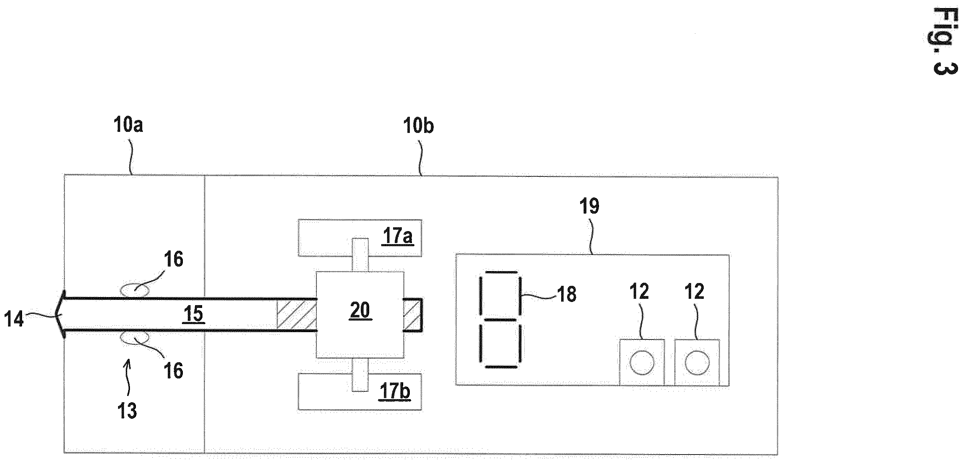

Die Figuren 2 und 3 zeigen Ausführungen der hierfür vorgesehenen Mittel zur Betriebsarteinstellung.

Figur 2 zeigt schematisch ein erstes Gehäuseteil 10a und ein zweites Gehäuseteil 10b des Gehäuses 5, 5' der Sendereinheit 2 oder Empfängereinheit 7 des Lichtvorhangs 1 gemäß Figur 1.

In dem zweiten Gehäuseteil 10b ist eine Leiterplatte 11 integriert, auf welcher Optikelemente 12 angeordnet sind. Je nachdem, ob die Gehäuseteile 10a, 10b Bestandteile des Gehäuses 5 der Sendereinheit 2 oder des Gehäuses 5' der Empfängereinheit 7 sind, sind die Optikelemente 12 von Sendern 4 oder Empfängern 8 gebildet. Der Übersichtlichkeit halber sind in Figur 2 nur zwei Optikelemente 12 dargestellt.

Als Mittel zur Betriebsarteinstellung ist ein Betätiger 13 vorgesehen, der ein an der Außenseite des ersten Gehäuseteils 10a freiliegenden Betätigerkopf 14 mit einer Betätigungsfläche aufweist. An den Betätigerkopf 14 schließt eine Welle 15 als weiterer Bestandteil des Betätigers 13 an. Die Welle 15 ist mittels einer Dichtung 16 im Gehäuseteil 10a abgedichtet gelagert, sodass die Welle 15 und der gesamte Betätiger 13 eine vollständige dichte Schnittstelle zum Gehäuse 5, 5' ausbilden.

Die Welle 15 und damit der Betätiger 13 ist im Gehäuse 5, 5' drehbar gelagert. Generell kann die Welle 15 auch in axialer Richtung verschiebbar gelagert sein.

Durch Drehen am Betätigerkopf 14 kann der Betätiger 13 zur Betriebsarteinstellung um seine Längsachse gedreht werden.

Die Betätigungsfläche kann als Manipulationsschutz so ausgebildet sein, dass diese nur mit einem speziellen Betätigungs-Werkzeug betätigt werden kann. Alternativ kann als Manipulationsschutz die Betätigungsfläche mit einer Abdeckung abgedeckt sein.

An den Betätiger 13 sind Schaltmittel zur Betriebsarteinstellung gekoppelt. Erfindungsgemäß sind die Schaltmittel von zwei identischen Schaltern in Form von Kodierschaltern 17a, 17b gebildet. In einem Beispiel, das nicht Teil der vorliegenden Erfindung ist, können die Schaltmittel auch nur einen Schalter umfassen.

Durch Drehen des Betätigers 13 werden die Schaltmittel simultan betätigt. Entsprechend der Drehstellung des Betätigers 13 nehmen die Kodierschalter 17a, 17b bestimmte Schaltzustände ein und generieren codierte Signale, die die einzustellende Betriebsart definieren.

Diese codierten Signale werden einer Steuer- und Auswerteeinheit zugeführt, die von der Sendersteuerung 6 oder der Auswerteeinheit 9 gebildet sein kann.

Im vorliegenden Fall geben die je nach Drehstellung des Betätigers 13 in den Kodierschaltern 17a, 17b generierten codierten Signale die damit eingestellte Betriebsart unmittelbar vor, die dann in der Steuer- und Auswerteeinheit übernommen werden kann.

Alternativ können durch Betätigen des Betätigers 13 die Schaltmittel Signale generieren, in Abhängigkeit derer in der Steuer- und Auswerteeinheit eine Betriebsart bestimmt ist.

Die Kodierschalter 17a, 17b bilden redundante Schaltmittel. In der Steuer- und Auswerteeinheit wird die fehlerfreie Funktion der Kodierschalter 17a, 17b geprüft. Diese liegt dann vor, wenn die Kodierschalter 17a, 17b identische codierte Signale generieren. Nur wenn dies der Fall ist, wird die eingestellte Betriebsart in der Steuer- und Auswerteeinheit übernommen, ansonsten wird eine Fehlermeldung generiert.

Generell kann ein weiterer Betätiger 13 vorgesehen sein, der an der Außenseite des Gehäuses 5, 5' betätigbar ist, wobei mit dem weiteren Betätiger 13 eine ausgewählte Betriebsart bestätigbar ist.

Alternativ kann eine Betriebsart durch eine Ein-/Ausschaltsequenz einer Betriebsspannung betätigbar sein.

Damit wird die Fehlersicherheit der Betriebsart weiter erhöht, da im Fehlerfall eine Sicherheitsmaßnahme ausgelöst werden kann, beispielsweise die Blockierung der Sensorfunktion des Lichtvorhangs 1.

Die eingestellte Betriebsart wird unmittelbar mit Anzeigemitteln angezeigt. Im vorliegenden Fall ist als Anzeigemittel eine elektronische Anzeige in Form eines Displays 18 vorgesehen. Das Display 18 liegt hinter einer transparenten Scheibe 19, durch welche auch die Lichtstrahlen 3 zu oder von den Optikelementen 12 geführt sind.

Alternativ kann auch der Betätiger 13 selbst als Anzeigemittel genutzt werden.

Beispielsweise sind als Anzeigemittel auf dem Betätiger 13 eine Markierung und am Gehäuse 5, 5' eine Skala vorgesehen.

Alternativ ist als Anzeigemittel eine elektronische Anzeige vorgesehen.

Insbesondere für den Fall, dass die Anzeigemittel als elektronische Anzeigen ausgebildet sind, kann deren Funktion über die Steuer- und Auswerteeinheit getestet werden.

Figur 3 zeigt eine Abwandlung der Ausführungsform gemäß Figur 2. Die Ausführungsform gemäß Figur 3 unterscheidet sich von der Anordnung gemäß Figur 2 nur dadurch, dass an die Welle 15 des Betätigers 13 ein Schneckenrad 20 vorgesehen ist. Durch Drehen des Betätigers 13 wird das Schneckenrad 20 gedreht wodurch die Kodierschalter 17a, 17b zur Einstellung der Betriebsart betätigt werden.

### Bezugszeichenliste

- (1): Lichtvorhang
- (2): Sendereinheit
- (3): Lichtstrahlen
- (4): Sender
- (5, 5'): Gehäuse
- (6): Sendersteuerung
- (7): Empfängereinheit
- (8): Empfänger
- (9): Auswerteeinheit
- (10a): Gehäuseteil, erstes
- (10b): Gehäuseteil, zweites
- (11): Leiterplatte
- (12): Optikelement
- (13): Betätiger
- (14): Betätigerkopf
- (15): Welle
- (16): Dichtung
- (17a, b): Kodierschalter
- (18): Display
- (19): Scheibe
- (20): Schneckenrad

## Patentansprüche

1. Sensor zur Erfassung von Objekten in einem Überwachungsbereich, mit wenigstens einem Gehäuse (5, 5') zur Aufnahme von Sensorkomponenten, wobei Mittel zur Betriebsarteinstellung vorgesehen sind, welche einen eine Welle (15) aufweisenden Betätiger (13) umfassen, der mittels Dichtmitteln abgedichtet in einer Gehäusewand gelagert ist und an der Außenseite des Gehäuses (5, 5') betätigbar ist, wobei im Gehäuse (5, 5') Schaltmittel vorgesehen sind, die durch Betätigen des Betätigers (13) vorgegebene Schaltzustände einnehmen, durch welche Betriebsarten bestimmt sind, wobei Anzeigemittel zur Anzeige einer eingestellten Betriebsart vorgesehen sind, und wobei eine Steuer- und Auswerteeinheit zur Steuerung von Sensorkomponenten und/oder zur Auswertung von Sensorsignalen vorgesehen ist, wobei die Steuer- und Auswerteeinheit ausgebildet ist, den Sensor in der eingestellten Betriebsart zu betreiben, **dadurch gekennzeichnet, dass** jedes Schaltmittel zwei dem Betätiger (13) zugeordnete Schalter (17a, 17b) umfasst, welche eine redundante Struktur zur Betriebsarteinstellung bilden, wobei die Steuer- und Auswerteeinheit ausgebildet ist zu prüfen, dass die beiden Schalter ein identisches Signal erzeugen, zur Fehlerkontrolle der Schaltmittel.

2. Sensor nach Anspruch 1, **dadurch gekennzeichnet, dass** die Mittel zur Betriebsarteinstellung ausgebildet sind, eine Betriebsarteinstellung durch Drehen und/oder Verschieben der Welle (15) des Betätigers (13) zu bewirken.

3. Sensor nach Anspruch 1, **dadurch gekennzeichnet, dass** unterschiedliche Betätiger (13) und/oder Wellen (15) vorgesehen sind, welche wahlweise in der Gehäusewand gelagert werden können, wobei die Mittel zur Betriebsarteinstellung ausgebildet sind, abhängig von einem ausgewählten Betätiger (13) ein spezifisches Schaltmittel zu betätigen.

4. Sensor nach Anspruch 3, **dadurch gekennzeichnet, dass** als Betätiger (13) Schrauben unterschiedlicher Längen vorgesehen sind.

5. Sensor nach Anspruch 3, **dadurch gekennzeichnet, dass** die Schaltmittel ausgebildet sind, unterschiedliche Formen oder Geometrien oder unterschiedliche Materialbeschaffenheit des Betätigers (13) zu erfassen und abhängig hiervon bestimmte Schaltzustände einzunehmen.

6. Sensor nach Anspruch 5, **dadurch gekennzeichnet, dass** sich die Betätiger (13) hinsichtlich magnetischer oder dielektrischer Eigenschaften oder optischer Eigenschaften in Form von Transmissions-, Oberflächenremissions- oder Farbeigenschaften unterscheiden.

7. Sensor nach einem der Ansprüche 1 bis 6, **dadurch gekennzeichnet, dass** der Betätiger (13) ausgebildet ist, zwei diesem zugeordnete Schalter simultan zu betätigen.

8. Sensor nach Anspruch 7, **dadurch gekennzeichnet, dass** die beiden Schalter gemeinsam auf einer Welle (15) angeordnet sind und die Welle (15) ausgebildet ist, die Schalter gleichzeitig zu betätigen.

9. Sensor nach Anspruch 8, **dadurch gekennzeichnet, dass** der Betätiger (13) eine Schnecke aufweist, die ausgebildet ist, die beiden Schalter gleichzeitig zu betätigen.

10. Sensor nach einem der Ansprüche 6 bis 9, **dadurch gekennzeichnet, dass** jeder Schalter ein Kodierschalter (17a, 17b) ist.

11. Sensor nach einem der Ansprüche 1 bis 10, **dadurch gekennzeichnet, dass** als Anzeigemittel auf dem Betätiger (13) eine Markierung und am Gehäuse (5, 5') eine Skala vorgesehen sind.

12. Sensor nach einem der Ansprüche 1 bis 11, **dadurch gekennzeichnet, dass** als Anzeigemittel eine elektronische Anzeige vorgesehen ist.

13. Sensor nach einem der Ansprüche 1 bis 11, **dadurch gekennzeichnet, dass** als Anzeigemittel unterschiedliche Farben und/oder Formgebungen des Betätigers (13) vorgesehen sind.

14. Sensor einem der Ansprüche 1 bis 13, **dadurch gekennzeichnet, dass** durch Betätigen des Betätigers (13) eine Betriebsart unmittelbar vorgegeben ist.

15. Sensor einem der Ansprüche 1 bis 13, **dadurch gekennzeichnet, dass** durch Betätigen des Betätigers (13) die Schaltmittel ausgebildet sind Schaltsignale zu generieren, in Abhängigkeit derer in der Steuer- und Auswerteeinheit eine Betriebsart bestimmt ist.

16. Sensor nach einem der Ansprüche 1 bis 15, **dadurch gekennzeichnet, dass** die Steuer- und Auswerteeinheit ausgebildet ist, eingestellte Codierungen zweier Schalter zu vergleichen.

17. Sensor nach einem der Ansprüche 1 bis 16, **dadurch gekennzeichnet, dass** die Steuer- und Auswerteeinheit ausgebildet ist, die Anzeigemittel zu testen.

18. Sensor nach einem der Ansprüche 1 bis 17, **dadurch gekennzeichnet, dass** der Betätiger (13) eine an der Außenseite des Gehäuses (5, 5') angeordnete Betätigungsfläche aufweist, die ausgebildet ist, nur mit einem Betätigungs-Werkzeug betätigt zu werden.

19. Sensor nach einem der Ansprüche 1 bis 17, **dadurch gekennzeichnet, dass** ein Teil des Betätigers (13) an einer Außenseite eines Gehäuses (5, 5') angeordnet ist und eine Abdeckung vorgesehen ist, die ausgebildet ist den an der Außenseite des Gehäuses (5, 5') angeordneten Teil des Betätigers (13) abzudecken.

20. Sensor nach einem der Ansprüche 1 bis 19, **dadurch gekennzeichnet, dass** ein weiterer Betätiger (13) vorgesehen ist, der an der Außenseite des Gehäuses (5, 5') angeordnet ist, wobei der weitere Betätiger (13) ausgebildet ist, eine ausgewählte Betriebsart zu bestätigen.

21. Sensor nach einem der Ansprüche 1 bis 22, **dadurch gekennzeichnet, dass** die Mittel zur Betriebsarteinstellung ausgebildet sind, eine Betriebsart durch eine Ein-/Ausschaltsequenz einer Betriebsspannung zu bestätigen.

22. Sensor nach einem der Ansprüche 20 oder 21, **dadurch gekennzeichnet, dass** die Mittel zur Betriebsarteinstellung ausgebildet sind, die Sensorfunktion bei einer unbestätigten Betriebsart zu blockieren.

23. Sensor nach einem der Ansprüche 1 bis 22, **dadurch gekennzeichnet, dass** dieser ein Sicherheitssensor ist.

24. Sensor nach einem der Ansprüche 1 bis 23, **dadurch gekennzeichnet, dass** dieser ein optischer Sensor ist.

25. Sensor nach einem der Ansprüche 1 bis 24, **dadurch gekennzeichnet, dass** der Betätiger (13) als Befestigungsmittel von Gehäuseelementen ausgebildet ist.

## Claims

1. A sensor for detecting objects in a monitoring area, having at least one housing (5, 5') for receiving sensor components, means being provided for setting the operating mode, which means comprise an actuator (13) having a shaft (15), which actuator is mounted in a sealed manner in a housing wall by means of sealing means and can be actuated on the outside of the housing (5, 5'), switching means being provided in the housing (5, 5'), which switching means assume predetermined switching states by actuating the actuator (13), which switching states determine operating modes, wherein switching means are provided in the housing (5, 5') which, by actuating the actuator (13), assume predetermined switching states by which operating modes are determined, wherein display means are provided for displaying a set operating mode, and wherein a control and evaluation unit is provided for controlling sensor components and/or for evaluating sensor signals, wherein the control and evaluation unit is designed to operate the sensor in the set operating mode, **characterised in that** each switching means comprises two switches (17a, 17b) which are assigned to the actuator (13) and which form a redundant structure for setting the operating mode, wherein the control and evaluation unit is designed to check that the two switches generate an identical signal, for error control of the switching means.

2. A sensor according to claim 1, **characterised in that** the means for setting the operating mode are designed to conduct an operating mode setting by rotating and/or displacing the shaft (15) of the actuator (13).

3. A sensor according to claim 1, **characterised in that** different actuators (13) and/or shafts (15) are provided, which can be selectively mounted in the housing wall, the means for setting the operating mode being designed to actuate a specific switching means depending on a selected actuator (13).

4. A sensor according to claim 3, **characterised in that** screws of different lengths are provided as actuators (13).

5. A sensor according to claim 3, **characterised in that** the switching means are designed to detect different shapes or geometries or different material properties of the actuator (13) and to assume certain switching states as a function thereof.

6. A sensor according to claim 5, **characterised in that** the actuators (13) differ with regard to magnetic or dielectric properties or optical properties in the form of transmission, surface remissivity or colour properties.

7. A sensor according to one of claims 1 to 6, **characterised in that** the actuator (13) is designed to actuate two switches assigned to it simultaneously.

8. A sensor according to claim 7, **characterised in that** the two switches are arranged together on a shaft (15) and the shaft (15) is designed to actuate the switches simultaneously.

9. A sensor according to claim 8, **characterised in that** the actuator (13) has a screw which is designed to actuate the two switches simultaneously.

10. A sensor according to one of claims 6 to 9, **characterised in that** each switch is a coding switch (17a, 17b).

11. A sensor according to one of claims 1 to 10, **characterised in that** a marking on the actuator (13) and a scale on the housing (5, 5') are provided as display means.

12. A sensor according to one of claims 1 to 11, **characterised in that** an electronic display is provided as the display means.

13. A sensor according to one of claims 1 to 11, **characterised in that** different colours and/or shapes of the actuator (13) are provided as display means.

14. A sensor according to one of claims 1 to 13, **characterised in that** an operating mode is directly predetermined by actuating the actuator (13).

15. A sensor according to one of claims 1 to 13, **characterised in that**, by actuating the actuator (13), the switching means are designed to generate switching signals, depending on which an operating mode is determined in the control and evaluation unit.

16. A sensor according to one of claims 1 to 15, **characterised in that** the control and evaluation unit is designed to compare set codings of two switches.

17. A sensor according to one of claims 1 to 16, **characterised in that** the control and evaluation unit is designed to test the display means.

18. A sensor according to one of claims 1 to 17, **characterised in that** the actuator (13) has an actuating surface arranged on the outside of the housing (5, 5'), which is designed to be actuated only with an actuating tool.

19. A sensor according to one of claims 1 to 17, **characterised in that** a part of the actuator (13) is arranged on an outer side of a housing (5, 5') and a cover is provided which is designed to cover the part of the actuator (13) arranged on the outer side of the housing (5, 5).

20. A sensor according to one of claims 1 to 19, **characterised in that** a further actuator (13) is provided, which is arranged on the outside of the housing (5, 5'), wherein the further actuator (13) is designed to confirm a selected operating mode.

21. A sensor according to one of claims 1 to 22, **characterised in that** the means for setting the operating mode are designed to confirm an operating mode by an on/off sequence of an operating voltage.

22. A sensor according to one of claims 20 or 21, **characterised in that** the means for setting the operating mode are designed to block the sensor function in an unconfirmed operating mode.

23. A sensor according to one of claims 1 to 22, **characterised in that** it is a safety sensor.

24. A sensor according to one of claims 1 to 23, **characterised in that** this is an optical sensor.

25. A sensor according to one of claims 1 to 24, **characterised in that** the actuator (13) is designed as a fastening means for housing elements.

## Revendications

1. Capteur pour la détection d'obj ets dans une zone de surveillance, comportant au moins un boîtier (5, 5') pour recevoir les composants du capteur, des moyens pour régler le mode de fonctionnement, lesquels moyens comprennent un actionneur (13) avec un arbre (15), lequel actionneur est monté de manière étanche dans une paroi du boîtier au moyen de moyens d'étanchéité et peut être actionné à l'extérieur du boîtier (5, 5'), des moyens de commutation étant prévus dans le boîtier (5, 5'), lesquels moyens de commutation prennent des états de commutation prédéterminés en actionnant l'actionneur (13), lesquels états de commutation déterminent les modes de fonctionnement, des moyens de com-mutation étant prévus dans le boîtier (5, 5'), lesquels moyens de commutation prennent des états de commutation prédéterminés en actionnant l'actionneur (13), lesquels états de commutation déterminent des modes de fonctionnement, 5'), dans lequel des moyens de commutation sont prévus dans le boîtier (5, 5') qui, en actionnant l'actionneur (13), prennent des états de commutation prédéterminés par lesquels les modes de fonctionnement sont déterminés, dans lequel des moyens d'affichage sont prévus pour afficher un mode de fonctionnement défini, et dans lequel une unité de commande et d'évaluation est prévue pour commander les composants du capteur et/ou pour évaluer les signaux du capteur, dans lequel l'unité de commande et d'évaluation est conçue pour faire fonc-tionner le capteur dans le mode de fonctionnement défini, **caractérisé en ce que** chaque moyen de commutation comprend deux commutateurs (17a, 17b) qui sont affectés à l'actionneur (13) et qui forment une structure redondante pour définir le mode de fonctionnement, dans lequel l'unité de commande et d'évalua-tion est conçue pour vérifier que les deux commutateurs génèrent un signal identique, pour le contrôle d'erreur des moyens de commutation.

2. Capteur selon la revendication 1, **caractérisé en ce que** les moyens de réglage du mode de fonctionnement sont conçus pour effectuer un réglage du mode de fonctionnement par rotation et/ou déplacement de l'arbre (15) de l'actionneur (13).

3. Capteur selon la revendication 1, **caractérisé en ce que** différents actionneurs (13) et/ou arbres (15) sont fournis, qui peuvent être montés sélectivement dans la paroi du boîtier, les moyens de réglage du mode de fonctionnement étant conçus pour actionner un moyen de commutation spécifique en fonction d'un actionneur sélectionné (13).

4. Capteur selon la revendication 3, **caractérisé en ce que** des vis de différentes longueurs sont prévues comme actionneurs (13).

5. Capteur selon la revendication 3, **caractérisé en ce que** les moyens de commutation sont conçus pour détecter différentes formes ou géométries ou différentes propriétés matérielles de l'actionneur (13) et pour prendre certains états de commutation en fonction de celles-ci.

6. Capteur selon la revendication 5, **caractérisé par le fait que** les actionneurs (13) se distinguent par des propriétés magnétiques ou diélectriques ou des propriétés optiques sous forme de transmission, de rémissivité de surface ou de propriétés de couleur.

7. Capteur selon l'une des revendications 1 à 6, **caractérisé en ce que** l'actionneur (13) est conçu pour actionner simultanément deux interrupteurs qui lui sont affectés.

8. Capteur selon la revendication 7, **caractérisé en ce que** les deux interrupteurs sont disposés ensemble sur un arbre (15) et que l'arbre (15) est conçu pour actionner les interrupteurs simultanément.

9. Capteur selon la revendication 8, **caractérisé en ce que** l'actionneur (13) comporte une vis qui est conçue pour actionner les deux interrupteurs simultanément.

10. Capteur selon l'une des revendications 6 à 9, **caractérisé en ce que** chaque interrupteur est un interrupteur de codage (17a, 17b).

11. Capteur selon l'une des revendications 1 à 10, **caractérisé en ce qu'**un marquage sur l'actionneur (13) et une échelle sur le boîtier (5, 5') sont prévus comme moyens d'affichage.

12. Capteur selon l'une des revendications 1 à 11, **caractérisé en ce qu'**un affichage électronique est prévu comme moyen d'affichage.

13. Capteur selon l'une des revendications 1 à 11, **caractérisé en ce que** différentes couleurs et/ou formes de l'actionneur (13) sont prévues comme moyens d'affichage.

14. Capteur selon l'une des revendications 1 à 13, **caractérisé en ce qu'**un mode de fonctionnement est directement prédéterminé par l'actionnement de l'actionneur (13).

15. Capteur selon l'une des revendications 1 à 13, **caractérisé en ce que**, par l'actionnement de l'actionneur (13), les moyens de commutation sont conçus pour générer des signaux de commutation, en fonction desquels un mode de fonctionnement est déterminé dans l'unité de commande et d'évaluation.

16. Capteur selon l'une des revendications 1 à 15, **caractérisé en ce que** l'unité de commande et d'évaluation est conçue pour comparer les codages d'ensemble de deux commutateurs.

17. Capteur selon l'une des revendications 1 à 16, **caractérisé en ce que** l'unité de commande et d'évaluation est conçue pour tester les moyens d'affichage.

18. Capteur selon l'une des revendications 1 à 17, **caractérisé en ce que** l'actionneur (13) présente une surface d'actionnement disposée à l'extérieur du boîtier (5, 5'), qui est conçue pour être actionnée uniquement à l'aide d'un outil d'actionnement.

19. Capteur selon l'une des revendications 1 à 17, **caractérisé en ce qu'**une partie de l'actionneur (13) est disposée sur un côté extérieur du boîtier (5, 5') et qu'un couvercle est prévu pour couvrir la partie de l'actionneur (13) disposée sur le côté extérieur du boîtier (5, 5).

20. Capteur selon l'une des revendications 1 à 19, **caractérisé par** la présence d'un autre actionneur (13) disposé à l'extérieur du boîtier (5, 5'), dans lequel l'autre actionneur (13) est conçu pour confirmer un mode de fonctionnement sélectionné.

21. Capteur selon l'une des revendications 1 à 22, **caractérisé en ce que** les moyens de réglage du mode de fonctionnement sont conçus pour confirmer un mode de fonctionnement par une séquence marche/arrêt d'une tension de fonctionnement.

22. Capteur selon l'une des revendications 20 ou 21, **caractérisé en ce que** les moyens de réglage du mode de fonctionnement sont conçus pour bloquer la fonction du capteur dans un mode de fonctionnement non confirmé.

23. Capteur selon l'une des revendications 1 à 22, **caractérisé en ce qu'**il s'agit d'un capteur de sécurité.

24. Capteur selon l'une des revendications 1 à 23, **caractérisé en ce qu'**il s'agit d'un capteur optique.

25. Capteur selon l'une des revendications 1 à 24, **caractérisé en ce que** l'actionneur (13) est conçu comme un moyen de fixation pour des éléments de boîtier.
